Europäisches Patentamt

European Patent Office

Office européen des brevets

(11) Veröffentlichungsnummer: **0 221 542**
**A2**

(12) **EUROPÄISCHE PATENTANMELDUNG**

(21) Anmeldenummer: 86115294.0

(22) Anmeldetag: 05.11.86

(51) Int. Cl.⁴: **B60R 22/40** , B60R 22/42

(30) Priorität: 06.11.85 DE 3539280

(43) Veröffentlichungstag der Anmeldung:
13.05.87 Patentblatt 87/20

(84) Benannte Vertragsstaaten:
DE FR GB IT SE

(71) Anmelder: **Autoflug GmbH & Co
Fahrzeugtechnik
Industriestrasse 10 Postfach 1180
D-2084 Rellingen 2(DE)**

(72) Erfinder: **Borutta-Mensing, Werner
Meisenweg 26
D-2200 Elmshorn(DE)**

(74) Vertreter: **Kühnemann, Klaus et al
Patentanwälte Dipl.-Ing. Klaus Kühnemann
Dr.-Ing. Karl-Ernst Müller Sonderburgstrasse
36
D-4000 Düsseldorf 11(DE)**

(54) Gurtaufroller mit Klemmvorrichtung.

(57) Bei einer Sicherheitsgurt-Rückhaltevorrichtung, insbesondere in Kraftfahrzeugen, mit einem Gurtauffroller sowie mit einer die Blockierung des Gurtbandes herbeiführenden Klemmvorrichtung mit wenigstens einer beweglich angeordneten Klemmbacke, wobei das Gurtband durch die Klemmvorrichtung geführt ist, besteht das Problem, daß erst die Blockierung des Gurtaufrollers zu einem Ansprechen der Klemmvorrichtung führt, so daß eine durch die Reaktionszeit bestimmte Gurtfreigabe aus der Rückhaltevorrichtung die Folge ist. Zur Verhinderung dessen wird vorgeschlagen, daß die Gurtaufwickelwelle (14) verdrehfest eine Außenverzahnung (18) aufweist und daß im Auslösefall ein mit der beweglichen Klemmbacke (17) verbundenes Gestänge (23, 24, 25) über einen an sich bekannten Trägheitssensor (19) in Wirkverbindung mit der Verzahnung (18) einsteuerbar ist.

Fig. 1

## Gurtaufroller mit Klemmvorrichtung

Die Erfindung betrifft eine Sicherheitsgurt-Rückhaltevorrichtung, insbesondere in Kraftfahrzeugen, mit einem Gurtaufroller sowie mit einer die Blockierung des Gurtbandes herbeiführenden Klemmvorrichtung mit wenigstens einer beweglich angeordneten Klemmbacke, wobei das Gurtband durch die Klemmvorrichtung geführt ist.

Eine gattungsgemäße Rückhaltevorrichtung ist bereits aus der DE-AS 24 32 956 bekannt. Dabei wird das vom Gurtwickel des Gurtaufrollers ablaufende Gurtband zweimal umgelenkt, wobei zwischen den Umlenkstellen die Klemmvorrichtung für das Gurtband in der Art angeordnet ist, daß ein vom Gurtband infolge dessen Umlenkung betätigter Hebel die bewegliche Klemmbacke trägt. Nach Sperrung des Gurtaufrollers führt der Anstieg der Gurtauszugskraft im Umfallgeschehen zu einer entsprechenden Verschwenkung des Klemmhebels mit Klemmung des Gurtbandes.

Mit einer derartigen Anordnung der Klemmvorrichtung und vor allem mit deren Auslösung ist der Nachteil verbunden, daß der Betätigung der Klemmvorrichtung als Rückhaltung der mit dem Sicherheitsgurt angeschnallten Person eine selbsttätige Sperrung des Gurtaufrollers vorangehen muß, da erst der durch die Sperrung des Gurtaufrollers bewirkte Anstieg der Gurtauszugskraft zur Betätigung des Klemmhebels mit selbstklemmender Wirkung führt. Durch diesen technisch bedingten Umweg läßt sich nicht vermeiden, daß eine gewisse Länge des Gurtbandes vom Gurtaufroller freigegeben wird, bevor dieser mit seinem Sperrsystem anspricht und so auch die Klemmwirkung der Klemmvorrichtung einleitet, so daß infolge der sowohl vom Gurtaufroller als auch noch von der Klemmvorrichtung freigegebenen Gurtbandes eine relativ große Vorverlagerung der angeschnallten Person und damit deren gewisse Gefährdung nicht verhindert werden kann.

Der Erfindung liegt daher die Aufgabe zugrunde, eine gattungsgemäße Rückhaltevorrichtung derart zu verbessern, daß bei einem Unfall das Ansprechen der Klemmvorrichtung ohne eine vorherige Freigabe an Gurtband deutlich beschleunigt ist.

Die Lösung dieser Aufgabe ergibt sich einschließlich vorteilhafter Ausgestaltungen und Weiterbildungen aus dem Inhalt der Patentansprüche, welche dieser Beschreibung vorangestellt sind.

Mit der Erfindung ist zunächst der Vorteil verbunden, daß die Klemmvorrichtung infolge ihrer Kopplung an ein bei selbstsperrenden Gurtaufrollern bewährtes und auf alle Fahrzeugbeschleunigungen ansprechendes Trägheitssystem auf entsprechende Vorgänge unmittelbar reagiert und ohne ein Nachlassen an Gurtband dieses einklemmt und die angeschnallte Person somit ohne jede Verzögerung sichert. Ein weiterer Vorteil der Erfindung ist darin zu sehen, daß der Gurtaufroller als Steuerelement für die Betätigung und/oder Auslösung der Klemmvorrichtung nicht mehr benötigt wird und daher ohne eigene, beim Gurtaufroller als bekannt vorauszusetzende Sperrsysteme ausgebildet sein kann. Je nach Anforderung kann es sich jedoch bei Ausführung der Erfindung empfehlen, auf die Sperrsysteme des Gurtaufrollers nicht zu verzichten, um im Normalbetrieb des Gurtaufrollers, d. h. ohne ein Ansprechen der Klemmvorrichtung im Unfallgeschehen, eine sichere Rückhaltung zu gewährleisten und für das Unfallgeschehen eine zusätzliche Sicherheitsreserve vorzuhalten.

Weitere Vorteile der Erfindung sind darin zu sehen, daß über die Koppelung des die Klemmvorrichtung betätigenden Gestänges mit der wellenfesten Verzahnung je nach deren getrieblicher Ausbildung praktisch beliebig hohe Ansteuerungskräfte für die bewegliche Klemmbacke erzeugt werden können, wobei die auf das Gurtband wirkende Gurtauszugskraft die Klemmwirkung jeweils verstärkt. Die Rückstellung des Gestänges erfolgt bei Fortfall einer Gurtauszugskraft unter der Wirkung der die Gurtaufwickelwelle rückdrehenden Aufwickelfeder selbsttätig, und schließlich können nach einem Ausführungsbeispiel der Erfindung Verzahnung und Gurtaufwickelwelle durch eine Überlastkupplung verbunden sein, so daß von der Gurtaufwickelwelle auf die Verzahnung nur ein begrenztes Drehmoment übertragen werden kann, und zwar zum Schutze der Verzahnung selbst sowie des von ihr beaufschlagten Gestänges.

In der Zeichnung sind Ausführungsbeispiele der Erfindung wiedergegeben, welche nachfolgend beschrieben sind. Es zeigen:

Fig. 1 einen Gurtaufroller mit Klemmvorrichtung in einer Seitenansicht,

Fig. 1a den Gegenstand der Figur 1 in einer abgewandelten Ausführungsform,

Fig. 2 ein anderes Ausführungsbeispiel des Gegenstandes gemäß Figur 1,

Fig. 3 ein weiteres Ausführungsbeispiel eines Gurtaufrollers mit Klemmvorrichtung in Seitenansicht

Fig. 4 eine Teilansicht des Gegenstandes gemäß Figur 3.

In einem gemeinsamen Gehäuse 10 sind ein Gurtaufroller 11 und eine Klemmvorrichtung 12 angeordnet. Ein Gurtband 13 ist auf der Gurtaufwickelwelle 14 des Gurtaufrollers 11 aufgewickelt und von dieser ablaufend zwischen dem Gehäuse 10 mit einem Klemmbeschlag 15 und einer beweglich bei 16 gelagerten Klemmbacke 17 aus dem Gurtaufroller mit Klemmvorrichtung herausgeführt.

Die Gurtaufwickelwelle 14 weist verdrehfest eine Außenverzahnung 18 zur Herstellung einer Wirkverbindung mit einem noch zu beschreibenden Gestänge auf. Ein Trägheitssensor 19 mit einem Gehäuse 20, einer kugelartigen Trägheitsmasse 21 und einem von dieser bei Kugelbewegungen ausgelenkten Sensorhebel 22 ist am Gehäuse 10 befestigt. Auf dem Sensorhebel 22 liegt ein an einem Winkelhebel 24 bei 5 sowohl drehbeweglich als auch mit dem Winkelhebel 24 kippbar gelagerter Hebel 23, dessen Spitze bis an den Umfang der Außenverzahnung 18 der Welle 14 reicht. In seinem Lagerpunkt ist der Hebel 23 verbunden mit einem Arm des schwenkbeweglich bei 6 am Gehäuse gelagerten Winkelhebels 24, dessen anderer Arm gelenkig an einer Schubstange 25 angreift, die mit ihrem freien Ende an der beweglichen Klemmbacke 17 angeschlagen ist.

Kommt es nun zu Fahrzeugbeschleunigungen oder Verzögerungen oberhalb einer mit Hilfe des Kugelsensors 19 einstellbaren Grenze, so bewegt sich die Kugel 21 aus ihrer Ruhelage und hebt dabei den Sensorhebel 22 an, wobei dieser gleichzeitig den Hebel 23 mit seiner Spitze in Wirkverbindung mit der Umfangsverzahnung 18 bringt, indem die Hebelspitze in Eingriff mit den Zähnen der Umfangsverzahnung 18 kommt. Wirkt nun gleichzeitig eine Gurtauszugskraft am Gurtband 13, so will sich die Gurtaufwickelwelle 14 entgegen dem Uhrzeigersinn drehen und verschiebt aufgrund ihrer Arretierung mit dem Hebel 23 diesen tangential auf das Gehäuse 10 zu. Diese Verschiebebewegung wird umgesetzt in eine Drehbewegung des Winkelhebels 24, der seine Drehbewegung auf die längsgerichtete Schubstange 25 überträgt, deren Längsbewegung zu einem Verschwenken der Klemmbacke 17 führt.

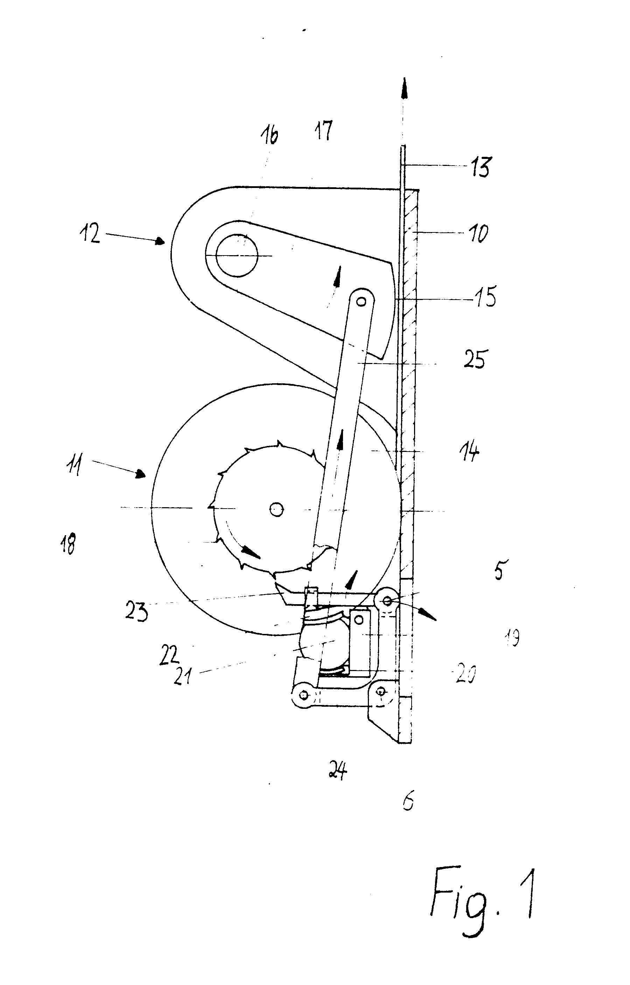

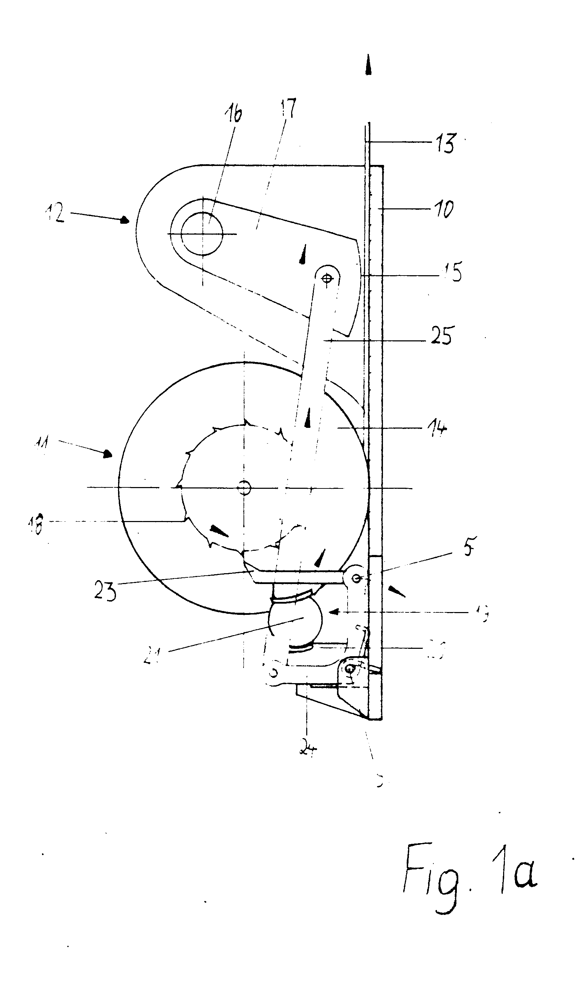

Entsprechend der in Figur 1a dargestellten leicht abgewandelten Ausführungsform kann auch vorgesehen sein, den Winkelhebel 24 selbst als Gehäuse für die Trägheitsmasse 21 auszubilden, wodurch insoweit der Trägheitssensor 19 und der Winkelhebel 24 zu einem Bauteil zusammengefaßt sind. Damit ist eine Vereinfachung des Gegenstandes dahingehend verbunden, daß die Trägheitsmasse 21 den nunmehr kombinierten Hebel 22, 23 unmittelbar in die Verzahnung 18 einsteuert. Der Winkelhebel 24 ist dann bei dieser Ausführungsform durch eine Feder oder sonstige Gestaltung in seiner Ruhelage zentriert.

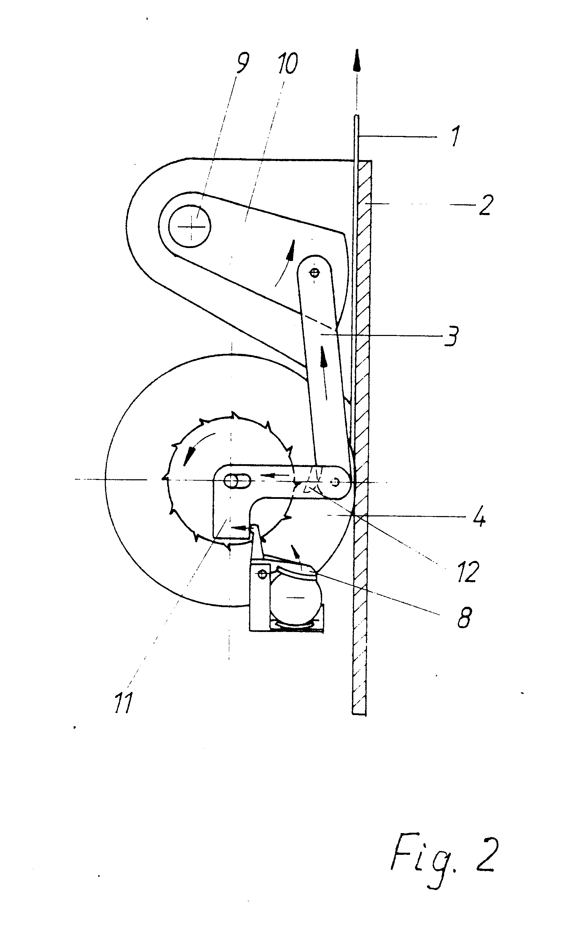

Bei dem Ausführungsbeispiel gemäß Figur 2 ist der Winkelhebel 24 unmittelbar am Lagerpunkt der Welle 14 angeordnet, und zwar quer zur Wellenachse verschieblich. An dem quer verschieblichen Arm des Winkelhebels 24 greift unmittelbar die Schubstange 25 an, wobei gleichzeitig dort ein Zahn 26 vorgesehen ist, der zum Eingriff in die Verzahnung 18 der Welle 14 eingerichtet ist. Der Sensorhebel 22 des Trägheitssensors 19 ist als Winkelhebel ausgebildet und greift mit seinem freien Winkelarm an dem anderen Winkelarm des Hebels 24 an. Kommt es nun zu einer Bewegung der Kugel 21 im Gehäuse 20 des Trägheitssensors 19, so schiebt der freie Schenkel des winkelförmigen Sensorhebels 22 den Winkelhebel 24 nach links, wodurch der Zahn 26 in Eingriff mit der Umfangsverzahnung 18 der Welle 14 gebracht wird. Kommt es nun infolge der wie beschrieben wirkenden Gurtauszugskraft zu einer Abwickelbewegung des Gurtbandes 13 von der Welle 14, so schiebt die Welle 14 über den Hebel 24 die Schubstange 25 nach oben und betätigt so die bewegliche Klemmbacke 17 mit Klemmung des Gurtbandes 13.

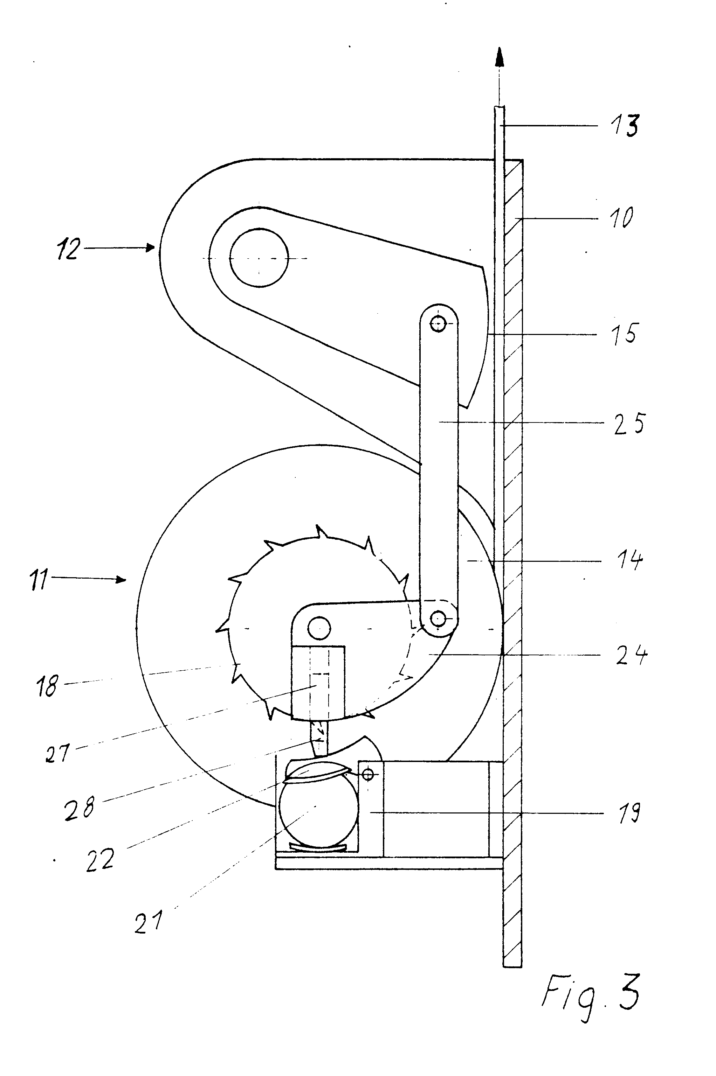

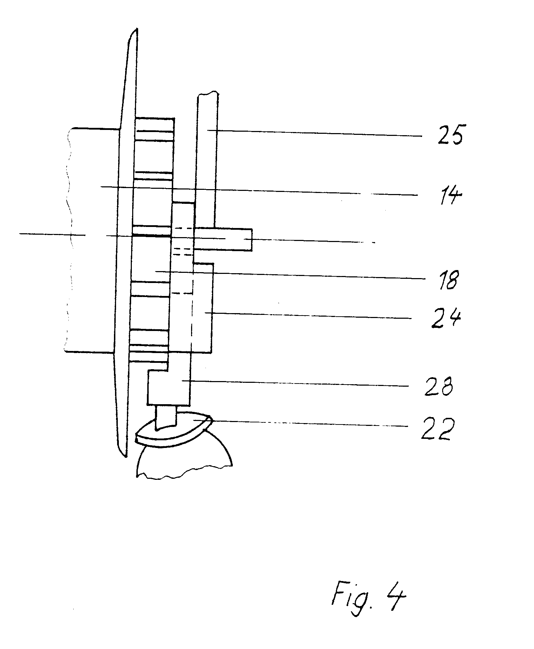

Bei einem weiteren Ausführungsbeispiel gemäß den Figuren 3 und 4 schließlich ist der Winkelhebel 24 drehbeweglich gelagert und mit seinem einen Ende mit der Schubstange 25 verbunden. Der andere, dem Trägheitssensor 19 zugewandte Winkelarm weist eine Nut 27 auf, in welcher ein Riegel 28 so geführt ist, daß er in seiner eingeschobenen Lage mit der Verzahnung 18 der Gurtaufwickelwelle 14 in Wirkverbindung steht. Der Riegel 28 ist über den Sensorhebel 22 des Sensors 19 verschiebbar.

Fahrzeugbeschleunigungen oder -verzögerungen führen auch bei diesem Ausführungsbeispiel dazu, daß der Sensorhebel 22 aus seiner Ruhestellung verlagert wird, wobei er den Riegel 28 in der Nut 27 des Winkelhebels 24 anhebt und somit den Winkelhebel 24 über die Verzahnung 18 so mit der Gurtaufwickelwelle 14 koppelt, daß deren durch die Gurtauszugskraft bewirkte Drehung in eine Schwenkbewegung des Winkelhebels 24 umgesetzt wird, welche eine Längsbewegung der am Hebel 24 angreifenden Schubstange 25 zur Folge hat, mittels derer die bewegliche Klemmbacke 17 im Sinne einer Schließbewegung betätigt wird.

Allen Ausführungsbeispielen ist gemeinsam, daß der Gurtbandauszug bis zur Klemmung des Gurtbandes in der Klemmeinrichtung von der Zahnteilung der Formschlußgestaltung und der Hebelübersetzung abhängig ist. Diese Verzahnung kann beliebig klein ausgeführt werden. Zur Vermeidung von Beschädigungen und zur Reduzierung der auftretenden Kräfte kann eine Überlastkupplung zwischen der Welle und der Formschlußgestaltung 18 vorgesehen sein.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

**Ansprüche**

1. Sicherheitsgurt-Rückhaltevorrichtung, insbesondere in Kraftfahrzeugen, mit einem Gurtaufroller sowie mit einer die Blockierung des Gurtbandes herbeiführenden Klemmvorrichtung mit wenigstens einer beweglich angeordneten Klemmbacke, wobei das Gurtband durch die Klemmvorrichtung geführt ist, dadurch gekennzeichnet, daß die Gurtaufwickelwelle (14) des Gurtaufrollers (11) verdrehfest eine Formschlußgestaltung (18) aufweist und daß im Auslösefall ein mit der beweglichen Klemmbacke - (17) verbundenes Gestänge (23, 24, 25) über einen an sich bekannten Trägheitssensor (19) in Wirkverbindung mit der Formschlußgestaltung (18) einsteuerbar ist.

2. Vorrichtung nach Anspruch 1, dadurch gekennzeichnet, daß das Gestänge (23, 24, 25) als Gelenkgetriebe ausgebildet ist.

3. Vorrichtung nach Anspruch 1 oder 2, dadurch gekennzeichnet, daß der vom Trägheitssensor (19) in die Gestaltung (18) einzusteuernde Hebel (23) längsverschieblich gelagert und gelenkig mit einem Winkelhebel (24) verbunden ist, an dessen freiem Ende eine Schubstange - (25) zur Betätigung der beweglichen Klemmbacke - (17) angreift.

4. Vorrichtung nach Anspruch 3, dadurch gekennzeichnet, daß der Winkelhebel (24) in seinem Winkelpunkt am Gehäuse (10) des Gurtaufrollers - (11) gelagert ist.

5. Vorrichtung nach Anspruch 1 oder 2, dadurch gekennzeichnet, daß der vom Trägheitssensor (19) in die Gestaltung (18) einzusteuernde Hebel als querverschieblich angeordneter Winkelhebel (24) ausgebildet ist, der einen Vorsprung (26) zum Eingriff in die Gestaltung (18) der Gurtaufwickelwelle (14) aufweist und mit einem Winkelschenkel gelenkig mit der Schubstange (25) zur Betätigung der beweglichen Klemmbacke (17) verbunden ist.

6. Vorrichtung nach Anspruch 5, dadurch gekennzeichnet, daß der Sensorhebel (22) des Trägheitssensors (19) als Winkelhebel ausgebildet ist, dessen einer Arm durch die Trägheitsmasse - (21) bewegbar ist und dessen anderer Arm an dem freien Schenkel des Hebels (24) angreift.

7. Vorrichtung nach Anspruch 1 oder 2, dadurch gekennzeichnet, daß der vom Trägheitssensor (19) in die Gestaltung (18) einzusteuernde Hebel (24) als drehbar gelagerter Winkelhebel ausgebildet ist, dessen einer Schenkel mit einer Schubstange (25) zur Betätigung der beweglichen Klemmbacke (17) verbunden ist, und dessen anderer Arm eine Längsnut (27) zur Aufnahme eines im Auslösefall von dem Trägheitssensor (19) angesteuerten und dabei in die Gestaltung (18) der Gurtaufwickelwelle (14) eingreifenden Riegels (28) aufweist.

8. Vorrichtung nach einem der Ansprüche 1 -7, dadurch gekennzeichnet, daß die Gurtaufwickelwelle (14) und die Gestaltung (18) durch eine Überlastkupplung miteinander verkoppelt sind.

9. Vorrichtung nach einem der Ansprüche 1 -8, dadurch gekennzeichnet, daß die Formschlußgestaltung als eine verdrehfest an der Gurtaufwickelwelle (14) angeordnete Außenverzahnung (18) ausgebildet ist.

Fig. 1

Fig. 1a

Fig. 2

13

12

10

15

25

11

14

18

24

27

28

22

19

21

Fig. 3

Fig. 4